# EUROPEAN PATENT SPECIFICATION

(11) **EP 0 333 489 B1**
(45) Date of publication and mention of the grant of the patent: **22.06.1994**
(21) Application number: 89302625.2
(22) Date of filing: 16.03.1989
(51) Int. Cl.: C01B 25/46, C22B 3/44, C22B 3/24

(54) **Process for the removal of heavy metal ions from phosphoric acid**
Verfahren zur Entfernung von Schwermetallionen aus Phosphorsäure
Procédé d'élimination d'ions de métaux lourds d'acide phosphorique

(30) Priority: 16.03.1988 IL 85751
(43) Date of publication of application: 20.09.1989
(73) Proprietor: IMI (TAMI) INSTITUTE FOR RESEARCH & DEVELOPMENT LTD., IL-31000 Haifa (IL)
(72) Inventor: Ukeles, Shmuel D., Kiryat-Ata 28000 (IL); Ben-Yoseph, Eliahu, Haifa 32715 (IL); Finkelstein, Nahum Phillip, Kiryat-Bialik 27000 (IL)
(74) Representative: Clifford, Frederick Alan

(56) References cited:
- EP-A- 0 085 344
- EP-A- 0 179 242
- EP-A- 0 210 387
- US-A- 4 511 541

## Description

The present invention relates to a simple process for the removal of heavy metal ions from phosphoric acid. More particularly, the invention relates to a simple and inexpensive process for the removal of cadmium and copper from phosphoric acid.

As known, cadmium is a toxic heavy metal and is a component, in most of the phosphate rock deposits. The content of cadmium in the phosphate rock varies in broad ranges from as 10-26 g/t in Israeli phosphate rock compared with 45 g/t in the Wyoming U.S.A. deposits and 76 g/t in the Senegal phosphate rock. By acidulation with a mineral acid such as sulfuric acid, hydrochloric acid or nitric acid, phosphoric acid is produced, containing in a dissolved state the cadmium constituent. From this phosphoric acid, this constituent passes into other downstream fertilizers, and ultimately finds its way into the human food chain. As it is widely accepted that this dietary intake of cadmium is harmful, there are certain countries where regulations are imposed to limit the content of cadmium content in phosphatic materials used for domestic purposes. This problem is becoming more acute with time due to pressure by environmental groups.

The prior art describes several methods for the partial removal of cadmium present in phosphoric acid. These methods include ion exchange, ion flotation, ion displacement by cementation, adsorption, precipitation by means of hydrogen sulfide and solvent extraction.
Ion exchange process was tested for cadmium removal from phosphoric acid, along other cations, but only about 50% of the cadmium present therein was removed. Also this process is quite expensive considering the capital investment and reagents costs.
Cadmium can be precipitated from wet-process phosphoric acid by the reaction with hydrogen sulfide and the removal of the resulting cadmium sulfide. However, both the reaction and the removal of cadmium sulfide have to be performed under pressure. This will make the process an expensive one to operate.
Solvent extraction has also been suggested for cadmium removal from phosphoric acid. A typical example of this method is illustrated by the DE-A-3,218,599. According to this method, the solvent consists of an amino halide which extracts most of the cadmium present in the acid. Several drawbacks characterize this method:
- Complicated recovery of the solvent.
- High efficiency of cadmium extraction are obtained only when the phosphoric acid has a concentration of above 45% P₂O₅.
- The method is relatively quite expensive in view of the costs of the extractants.
Another process which seems to be more Pertinent to the present invention is described in the Israeli Patent No. 67583. According to the process described therein, the wet- process phosphoric acid is treated with a dialkyldithio- phosphoric acid ester, followed by the adsorption of the resulting cadmium containing precipitate on a solid adsorbent such as active carbon or an aluminosilicate. The process seems to be quite interesting but has two main disadvantages:
1. It requires quite high amounts of reagents. Thus according to the Examples presented in the specification the reagents aro in the range of 2 - 4 kg per 1000 kg of treated phosphoric acid; and
2. The adsorbent has to be regenerated by stripping, concentrated hydrochloric acid being suggested.
In view of the above, the process may be expensive to be applied for phosphoric acid to be used in fertilizers.
The use of thio-organophosphines to extract heavy metal values from phosphoric acid has been described in US-A-4 511 541. The process herein disclosed does not contemplate the use either of a reducing agent or of a solid adsorbent. The extracting reagent is dissolved in an organic solvent from which it has to be separated after the extraction step

It is an object of the present invention to provide a simple process for the removal of cadmium and copper from phosphoric acid. It is another object of the present invention to provide a simple and relatively inexpensive process for the removal of cadmium and copper from phosphoric acid. It is yet another object of the present invention to provide a simple process for the removal of cadmium and copper from phosphoric acid which can be easily incorporated in any phosphoric acid plant.

In accordance with the present invention there is provided a process for the removal of cadmium and copper values from an aqueous solution of phosphoric acid containing such cadmium and copper values, by treating the phosphoric acid solution with both a reducing agent and a thio-organophosphine reagent to give precipitated cadmium and copper compounds firmly retained on a dispersed solid adsorbent inherently present in or added to the solution, to enable subsequent thorough washing of the adsorbent to remove phosphoric acid adhered thereto without significant removal of cadmium or copper values.

According to a preferred embodiment said decomposition of phosphate rock is carried out with sulfuric acid, in which case the calcium sulfate co-produced will retain the cadmium and copper compound thus obtaining substantially cadmium - and copper - free phosphoric acid. In this manner the invention provides an integrated process, wherein, by only one single solid separation e.g. by filtration, the resulting calcium sulfate as well as the cadmium and copper retained therein are removed. Moreover, due to the treatment with a reducing agent it was surprisingly found that only very small amounts of the thio-organophosphine reagents are required. The amounts of the required reagents are substantially the stoichiometrical to the cadmium and copper present in the reaction mixture. This is a very important feature considering that these reagents are expensive. The process according to the present invention reduces the cadmium content from its concentration, in the original phosphoric acid to less than 1 ppm cadmium. At the same time the concentrations of other heavy metals were reduced. Thus for instance, the copper content was found to be reduced to less than 1 ppm.
It was found that the preferred temperature for carrying out the cadmium removal by the organic reagent and the adsorption on calcium sulfate is between 15 and 85°C and most preferably between 25 and 65°C. These ranges of temperatures prevail in practice actually during the decomposition of the phosphate rock by sulfuric acid and no special provisions for heating are required.
The step of reduction is a very important stage for the process. It was found that, if this reduction is not carried out, the amounts of reagent required to obtain the same extent of cadmium and copper removal are up to four times that utilized when the reduction stage is applied. Actually, all known reducing reagents which reduce heavy metal ions to their lowest oxidation stage in solution or precipitate them in a metallic form, can be used. For example in case of iron, the form of ferric (Fe⁺³) is reduced to ferrous (Fe⁺²) or copper (Cu⁺² or Cu⁺) is cemented as copper metal. Examples of preferred reducing reagents are iron scrap, aluminum, hydrazine, red phosphorus, iron (II) sulfate, sodium hyposphite, hydroxymethane sulphinate, a mixture of sodium bisulfite and formaldehyde etc. Since the amounts of these reducing reagents that are used are relatively low, there is no danger of incorporating foreign constituents. Of course when iron will be utilized, it will be finally found in the phosphoric acid product. This should be taken in account in case that iron-rich phosphate rock is utilized in the decomposition by the mineral acid. Particularly preferred is aluminum, being also useful to combine with the fluoride and assist its elimination. The amount of reducing agent in case of iron may be varied in the range of between 0.1% to 1.2% of the total P₂O₅ present in the reaction mixture and this depends on the amount of the impurities and the reaction conditions. The reduction step is carried out either prior to the introduction of the organic reagent or together with the addition of the organic reagent. This will enable an appreciable decrease in the amounts of reagents required in the process, as previously mentioned.
The organic reagents found to be suitable for the present invention are selected from tri-n-propylphosphine sulfide, tri-n-octylphosphine sulfide, dicyclohexyl phosphine sulfide, diisobutyl dithiophosphine sulfide and dicyclohexyl dithiophosphinate. In particular preferred is diisobutyl dithiophosphinate, a reagent which is also commercially available being produced by American Cyanamid Company (Trade Mark Aerophine 3418 A).

It was found that the cadmium-loaded extractant is very firmly retained onto the adsorbent. This is a very important feature, particularly in the wet-process phosphoric acid wherein the calcium sulfate resulted acts as the adsorbent. In this manner, by washing the separated calcium sulfate only the adhering phosphoric acid without the cadmium will be removed and recycled to one of the stages of the wet-process acid and thus no cadmium is returned into the cycle. This is another important advantage of the process according to this invention, since it is known in the art that the calcium sulfate separated, always contains appreciable amounts of phosphoric acid - about 10% P₂O₅ - adhered thereto and these must not be wasted.
The process of cadmium and copper removal according to the present invention, is applicable in the various stages of the process for the production of wet-process phosphoric acid. According to one embodiment, the cadmium and copper removal is carried out together with the calcium sulfate filtration. After the decomposition of phosphate rock with sulfuric acid, a reducing agent is added to the reaction mixture followed by the incorporation of the organic reagent. The precipitated cadmium is subsequently retained onto the formed calcium sulfate from said decomposition mixture. In this manner, an integrated one-step operation is required to obtain substantially cadmium-free, wet-process phosphoric acid. This embodiment may be easily incorporated in any wet-process plant without requiring any change in the existent lay-out and no additional investment for equipment is needed.
The process according to the present invention is applicable also to the other stages in the production of wet-process phosphoric acid such as in the separation of filter acid and washing of the calcium sulfate or concentration step of the phosphoric acid.
The process is applicable to any P₂O₅ concentration of the phosphoric acid. Particularly good results on cadmium removal were obtained, when the phosphoric acid has a concentration of between 20% and 52% P₂O₅.
According to another preferred embodiment the treatment according to the present invention is applied on a phosphoric acid solution with a concentration in the range of about 30% to 44% by wt. P₂O₅. This treatment may be carried out either prior to the mixing of the filter acid (having a concentration of about 30% P₂O₅) with a more concentrated phosphoric acid solution, or during said mixing. It is also possible to adjust the free acidity of the solution to be treated, by adding small amounts of calcium carbonate or phosphate rock, thus obtaining the calcium sulfate required as the adsorbent. It was found that according to this embodiment, the amounts of the reagents required are reduced.
One may also conceive to use the process on a phosphoric acid obtained by the decomposition of phosphate rock by nitric acid or hydrochloric acid, in which after the treatment with a reducing agent and the thio-organophosphene, an adsorbent such as calcium sulfate is added.

According to another embodiment applicable outside a wet-process phosphoric acid plant it is possible to apply a reduction on the phosphoric acid solution followed by the precipitation with the thio-organophosphene in the presence of an adsorbent such as calcium sulfate.For this embodiment, one may select also other solid adsorbents which are capable of tenaciously retaining at their surface a sufficiently large quantity of the copper and cadmium in the precipitate thio-organophosphene reagent so that the quantity of dissolved reagent retained in the phosphoric acid after removal of the cadmium and copper is practically zero. Useful adsorbents for this purpose are for example active carbon, silicates, zeolites etc. A person skilled in the art will select the proper adsorbent depending on its costs and availability at site thereof.
When calcium sulfate is used as adsorbent, it was found that the filtration rate of calcium sulfate is not decreased by the cadmium removal according to the present invention. This is an important advantage in the wet-process phosphoric acid considering the problems which are generally encountered in the filtration of gypsum.
Another variation of the above embodiment is to impregnate the solid adsorbent, (calcium sulfate, active carbon or silicate) with the organic reagent. The phosphoric acid solution after being treated with a reducing agent is admixed with the said impregnated solid and subsequently the solids are filtered out producing a substantially cadmium-and copper-free phosphoric acid. The ratios between the organic extractant and the solid adsorbent vary with the origin of the crude phosphoric acid and should preferably be determined individually in preliminary tests. In a similar manner, one may conceive to apply this embodiment by percolation of the phosphoric acid solution after reduction, through a column containing the adsorbent impregnated with the organic reagent.
The amounts of the reagents required for the process are very small, due to the reduction stage, and depend on the cadmium concentration in the reaction mixture. Accordingly, the calcium sulfate filtered out from the reaction mixture - after being washed to remove the adherent phosphoric acid - may be discarded. This is again an important advantage over other prior methods which require a stripping operation to regenerate the solid adsorbent and/or to recover the organic reagents generally used in amounts larger than the stoichiometrical quantity required.
The invention will now be described in connection with certain preferred embodiments in the following Examples.
In the specification and Examples the concentrations are given in weight percentage unless otherwise stated.

### Example 1.

An amount of 180 g of wet-process phosphoric acid (28% P₂O₅, 8 ppm cadmium and 20 ppm copper) prepared from Arad phosphate rock was introduced into a vessel (500 ml) provided with a stirrer and a condenser. In the same vessel were introduced:
30 ml of water and 100 g of phosphate rock (Zin, Israel) containing 30% P₂O₅, 26 ppm cadmium and 22 ppm copper.
After a thorough agitation of the mixture, 82 g of concentrated sulfuric acid (96% by wt.) were added, the temperature being kept at about 60°C. The resulting mixture was further agitated for 1 hr. and then 1.2g of iron powder added and the agitation continued for an additional hour the temperature being maintained at 60°C.
To the resulting mixture an amount of 0.15 g of diisobutyl dithiophosphinate (sold by American Cyanamid Company under Trade Mark Aerophine 3418 A) dissolved in 100 mls water was added under a thorough agitation for an additional hour.
The slurry was filtered and the filtrate contained: 25% P₂O₅; less than 1 ppm cadmium and less than 1 ppm copper.
The filter cake-containing the calcium sulfate - was washed with three portions of different solutions at 60°C:
(a) phosphoric acid containing 11% P₂O₅ (obtained in a previous washing cycle);
(b) phosphoric acid containing 3% P₂O₅ (obtained in a previous washing cycle); and
(c) tap water.

It was found that all the three aqueous solutions, resulted after washing, contain less than 10% of the cadmium introduced, fact which proved that 90% of the cadmium remained adhered onto the gypsum to be discarded.

### EXAMPLE 2.

An amount of 1000 g of wet-process phosphoric acid (containing 28% P₂O₅, 20 ppm cadmium and 28 ppm copper) and 430 g of calcium sulfate were introduced in a reactor. The reactor was agitated and heated to about 60°C. Into the same reactor 3.4 g of iron metal powder were added and thoroughly agitated for about 45 minutes to accomplish the reduction. This was followed by the addition of 0.75 g of diisobutyl dithiophosphinate dissolved in 100 ml of water.
After agitating the slurry for about 60 minutes, the mixture was filtered. The filtrate contained only 1 ppm cadmium and less than 1 ppm copper.

### Example 3.

An amount of 1000 g of a synthetic solution of phosphoric acid, containing: 29% P₂O₅, 22 ppm cadmium 29 ppm copper and 800 ppm Fe⁺³ was introduced in a reactor together with 430 g of calcium sulfate dihydrate. The reactor was heated to about 60°C. Into the same reactor, 1.8 g of aluminum powder were introduced and thoroughly agitated to accomplish the reduction. The clarified filtrate contained less than 1 ppm copper (as a result of its reduction).
An amount of 0.75 g of diisobutyl dithiophosphinate dissolved in 100 ml water was added to the same reactor. After agitating the slurry for about 60 minutes the mixture was filtered and the filtrate found to contain:
0.17% Al
< 1 ppm cadmium
< 1 ppm copper

### EXAMPLE 4.

An amount of 1000 g of wet-process phosphoric acid, containing 29% P₂O₅, 22 ppm cadmium 29 ppm copper and 800 ppm Fe⁺³, was agitated with 430 g of calcium sulfate dihydrate at ambient temperature (about 25°C). Then 3.4 g of iron powder were added and the slurry agitated for about 45 minutes. The liquid phase after reduction contained 1.5 ppm copper.
An amount of 0.38 g of diisobutyl dithiophosphinate dissolved in 100 ml of water was added and the agitation was continued for an additional one hour. The clear filtrate contained only 1 ppm cadmium and 1 ppm copper. The filter cake - containing calcium sulfate - was washed with: (a) 430 grams of phosphoric acid (11% of P₂O₅); (b) 430 grams of phosphoric acid (3% P₂O₅) and (c) 430 grams of tap water. Each of the resulting wash solutions contained less than 1 ppm cadmium and 1 ppm copper. Calculation showed that more than 95% of the cadmium was retained on the gypsum filter cake.

### EXAMPLE 5.

The process was tested on a continuous basis in the laboratory. A slurry containing filter acid (25% P₂O₅, 20 ppm cadmium, 14 ppm copper) and gypsum (30% solids) was fed into a heated 0.5 liter reactor. The reactor had a residence time of 1 hour and was operated at 75°C. The feed rates were as follows: slurry 0.5 liter/hour, diisobutyl dithiophosphinate reagent 0.56 grams/hour, and iron powder 0.65 grams/hour. At steady state, the cadmium and copper contents in the treated acid were 1 ppm each.

### EXAMPLE 6.

The treatment was tested in a pilot plant for the preparation of wet-process acid from Nahal Zin phosphate rock and concentrated sulfuric acid. The system also included a phosphoric acid recycle (20% P₂O₅) resulting from the filtration of a phosphoric acid slurry. The system was operated at 75°C. The reactor contents (after dissolution) was a slurry of phosphoric acid (30% P₂O₅) and gypsum (30% solids). The phosphate rock, sulfuric acid, and recycle acid feeds were 850 grams/hour, 625 grams/hour and 2.2 liters/hour respectively. The residence time in the reactor was 5 hours. The diisobutyl dithiophosphinate reagent and the iron powder feeds were each 0.47 grams/h. At steady state, the filtrate contained 9 ppm cadmium and 1 ppm of copper.

### EXAMPLE 7.

The treatment was tested in a pilot plant for the preparation of wet-process acid from Nahal Zin phosphate rock and concentrated sulfuric acid. The system also included a phosphoric acid recycle (20% P₂O₅) resulting from the filtration of a phosphoric acid slurry. This reactor was operated at 75°C. The reactor contents (after dissolution) was a slurry of phosphoric acid (30% P₂O₅) and gypsum (30% solids). The phosphate rock, sulfuric acid, and recycle acid feeds were 850 grams/hour, 625 grams/hour and 2.2 liters/hour respectively. The slurry from this dissolution reactor was fed to a second smaller reactor having a residence time of 22 minutes, which was held at 60°C. 0.47 grams per hour of the diisobutyl dithiophosphinate reagent and iron powder were fed into the second reactor. The slurry exiting from the reactor was filtered. The filtrate contained less than 1 ppm cadmium and 1 ppm copper. After washing the gypsum containing filter cake in the same way as in Example 4, it was found that all of the resulting washes contained less than 1 ppm cadmium. The washed gypsum contained 11 ppm cadmium and 16 ppm copper.

### EXAMPLE 8.

The cadmium removal treatment was tested in a WPA production plant, having a production rate of 20,000 tons per year of P₂O₅. The plant consists of 6 digesters. The phosphate was introduced into digester 1, sulfuric acid was added to digester 2, and the cadmium removal treatment was carried out in digester 6 which had a residence time of 1 hour. Digester 6 was situated directly before the gypsum filtration stage. The slurry (26 tons per hour, 25% P₂O₅ and 25% solids) entered digester 6 at a temperature of about 75°C. The diisobutyl dithiophosphinate reagent and iron powder were added to the digester at a rate of 12 liters per hour and 18 kilograms per hour respectively. The cadmium and copper levels in the product acid after the filtration were 8 ppm and 1.3 ppm respectively.

### EXAMPLE 9.

One thousand grams of wet-process phosphoric acid (containing 52% P₂O₅, 18 ppm cadmium, and 28 ppm copper) and 10 grams of Merck gypsum were introduced into a 2 liter reactor and heated to about 50°C. Into the same reactor, 3,4 grams of iron powder and 0.75 grams of diisobutyl dithiophosphinate reagent were also added. After agitation at 50° C for 1 hour, the mixture was filtered using a glass sinter. The filtrate contained 6 ppm cadmium and 1 ppm copper.

### EXAMPLE 10.

One thousand grams of wet-process phosphoric acid (containing 40% P₂O₅, 18 ppm cadmium and 24 ppm copper) and 80 grams of gypsum (from a wet process phosphoric acid plant) were introduced into a 2 liter reactor and heated to 60°C. Into the same reactor, 1.5 grams of iron powder and 1.2 grams of diisobutyl dithiophosphinate reagent were also added. After agitation at 60°C for 15 minutes, a sample of the treated slurry was filtered. The filtrate contained 1.7 ppm cadmium and 1 ppm copper. After 24 hours, a filtered sample contained 4.8 ppm cadmium and 1 ppm copper.

## Claims

1. A process for the removal of cadmium and copper values from an aqueous solution of phosphoric acid containing such cadmium and copper values, by treating the phosphoric acid solution with both a reducing agent and a thio-organophosphine reagent to give precipitated cadmium and copper compounds firmly retained on a dispersed solid adsorbent inherently present in or added to the solution, to enable subsequent thorough washing of the adsorbent to remove phosphoric acid adhered thereto without significant removal of cadmium or copper values.

2. A process according to claim 1, carried out at a temperature in the range of between 15° and 85°C.

3. A process according to claims 1 or 2, wherein said adsorbent is selected from calcium sulfate, active carbon and aluminum silicates.

4. A process according to claims 1 to 3, wherein the calcium sulfate is obtained in the decomposition of phosphate rock by sulfuric acid.

5. A process according to claim 1, wherein said reduction is carried out using a reducing agent selected from the group consisting of iron powder, aluminum powder, hydrazine, red phosphorus, iron (II) sulfate, sodium hypophosphite, hydroxymethane sulfinate and a mixture of sodium bisulfite and formaldehyde.

6. A process according to claim 5, wherein the amount of reducing agent is in the range of between 1 to 10 kg per ton P₂O₅.

7. A process according to claims 5 or 6, wherein the reducing agent is incorporated prior to the thio-organophosphine.

8. A process according to claims 1 to 7, wherein said thio-organophosphine is selected from tri-n-propylphosphine sulfide, tri-n-octylphosphine sulfide, dicyclohexyl phosphine sulfide, diisobutyl dithiophosphine sulfide, diisobutyl dithiophosphinate and dichylohexyl dithiophosphinate.

9. A process according to claims 1 to 8, wherein the phosphoric acid solution has a concentration in the range of 20% to 52% P₂O₅.

10. A process according to claims 1 or 3, wherein said solid adsorbent is impregnated with the organic reagent and treated with the reduced phosphoric acid solution.

## Patentansprüche

1. Verfahren zur Entfernung von Cadmium- und Kupferanteilen aus einer wäßrigen Phosphorsäurelösung, die solche Cadmium- und Kupferanteile enthält, durch Behandlung der Phosphorsäurelösung mit einem Reduktionsmittel sowie einem Thio-organophosphin-Reagens, so daß ausgefällte Cadmium- und Kupferverbindungen entstehen, die fest an einem dispergierten, von Natur aus in der Lösung enthaltenenen oder dieser zugesetzten festen Adsorptionsmittel zurückgehalten werden, um ein nachfolgendes gründliches Waschen des Adsorptionsmittels zu ermöglichen und daran anhaftende Phosphorsäure ohne erheblichen Austrag von Cadmium- oder Kupferanteilen zu entfernen.

2. Verfahren nach Anspruch 1, ausgeführt bei einer Temperatur im Bereich zwischen 15° und 85°C.

3. Verfahren nach Anspruch 1 oder 2, wobei das Adsorptionsmittel unter Calciumsulfat, Aktivkohle und Aluminiumsilikaten ausgewählt wird.

4. Verfahren nach einem der Ansprüche 1 bis 3, wobei das Calciumsulfat bei der Zersetzung von Phosphaterz durch Schwefelsäure gewonnen wird.

5. Verfahren nach Anspruch 1, wobei die Reduktion unter Verwendung eines Reduktionsmittels erfolgt, das aus der Gruppe ausgewählt ist, die aus Eisenpulver, Aluminiumpulver, Hydrazin, rotem Phosphor, Eisen(II)-sulfat, Natriumhypophosphit, Hydroxymethansulfinat und einer Mischung aus Natriumbisulfit und Formaldehyd besteht.

6. Verfahren nach Anspruch 5, wobei der Anteil des Reduktionsmittels im Bereich von 1 bis 10 kg pro Tonne P₂O₅ liegt.

7. Verfahren nach Anspruch 5 oder 6, wobei das Reduktionsmittel vor dem Thio-organophosphin eingemischt wird.

8. Verfahren nach einem der Ansprüche 1 bis 7, wobei das Thioorganophosphin unter Tri-n-propylphosphinsulfid, Tri-n-octylphosphinsulfid, Dicyclohexylphosphinsulfid, Diisobutyldithiophosphinsulfid, Diisobutyldithiophosphinat und Dicyclohexyldithiophosphinat ausgewählt wird.

9. Verfahren nach einem der Ansprüche 1 bis 8, wobei die Phosphorsäurelösung eine Konzentration im Bereich von 20% bis 52% P₂O₅ hat.

10. Verfahren nach Anspruch 1 oder 3, wobei das feste Adsorptionsmittel mit dem organischen Reagens getränkt und mit der reduzierten Phosphorsäurelösung behandelt wird.

## Revendications

1. Procédé pour l'élimination de certaines quantités de cadmium et de cuivre d'une solution aqueuse d'acide phosphorique contenant de telles quantités de cadmium et de cuivre par traitement de la solution d'acide phosphorique à la fois avec un agent réducteur et avec un réactif thio-organophosphine pour donner un précipité de composés de cadmium et de cuivre fortement retenu sur un adsorbant solide en dispersion intrinsèquement présent dans ou ajouté à la solution, pour permettre un lavage ultérieur parfait de l'adsorbant pour enlever l'acide phosphorique qui y adhère sans enlèvement significatif des quantités de cadmium ou de cuivre.

2. Procédé suivant la revendication 1, effectué à une température dans la plage entre 15°C et 85°C.

3. Procédé suivant la revendication 1 ou 2, dans lequel l'adsorbant est choisi parmi le sulfate de calcium, le carbone actif et les silicates d'aluminium.

4. Procédé suivant les revendications 1 à 3, dans lequel le sulfate de calcium est obtenu dans la décomposition de roche de phosphate par de l'acide sulfurique.

5. Procédé suivant la revendication 1, dans lequel ladite réduction est effectuée par l'utilisation d'un agent réducteur choisi dans le groupe constitué par la poudre de fer, la poudre d'aluminium, l'hydrazine, le phosphore rouge, le sulfate de fer (II), l'hydrophosphite de sodium, le sulfinate d'hydroxyméthane et un mélange de bisulfite de sodium et de formaldéhyde.

6. Procédé suivant la revendication 5, dans lequel la quantité d'agent réducteur se situe dans la plage allant de 1 à 10 kg par tonne de P₂O₅.

7. Procédé suivant la revendication 5 ou 6, dans lequel l'agent réducteur est incorporé avant la thio-organophosphine.

8. Procédé suivant les revendications 1 à 7, dans lequel ladite thio-organophosphine est choisie parmi le sulfure de tri-n-propylphosphine, le sulfure de tri-n-octylphosphine, le sulfure de dicyclohexyl phosphine, le sulfure de diisobutyl dithiophosphine, le dithiophosphinate de diisobutyle et le dithiophosphinate de dicyclohexyle.

9. Procédé suivant les revendications 1 à 8, dans lequel la solution d'acide phosphorique a une concentration qui se situe dans la plage allant de 20% à 52% de P₂O₅.

10. Procédé suivant la revendication 1 ou 3, dans lequel ledit adsorbant solide est imprégné du réactif organique et traité avec la solution d'acide phosphorique réduite.
